# EUROPÄISCHE PATENTSCHRIFT

(11) **EP 3 412 879 B1**
(45) Veröffentlichungstag und Bekanntmachung des Hinweises auf die Patenterteilung: **11.03.2020**
(21) Anmeldenummer: 18170326.5
(22) Anmeldetag: 02.05.2018
(51) Int. Cl.: F01N 3/02, F01N 13/18, F16L 23/04, F01N 13/00

(54) **ABGASNACHBEHANDLUNGSVORRICHTUNG EINER BRENNKRAFTMASCHINE EINES KRAFTFAHRZEUGS**
EXHAUST GAS AFTER-TREATMENT APPARATUS OF A MOTOR VEHICLE ENGINE
DISPOSITIF DE POST-TRAITEMENT DE GAZ D'ÉCHAPPEMENT D'UN MOTEUR À COMBUSTION INTERNE D'UN VÉHICULE AUTOMOBILE

(30) Priorität: 07.06.2017 DE 102017005356
(43) Veröffentlichungstag der Anmeldung: 12.12.2018
(73) Patentinhaber: Roth Technik Austria Gesellschaft Mit Beschränkter Haftung, 3193 St. Aegyd a.N. (AT)
(72) Erfinder: SEEGER, Martin, 76597 Loffenau (DE); RÖSINGER, Hans, 76467 Bietigheim (DE); BINDER, Wilfried, 3180 Lilienfeld (AT)
(74) Vertreter: Wiedemann, Markus

(56) Entgegenhaltungen:
- WO-A2-2008/030639
- DE-U1-202005 001 616

## Beschreibung

Die Erfindung geht aus von einer Abgasnachbehandlungsvorrichtung einer Brennkraftmaschine eines Kraftfahrzeugs, gemäß dem Oberbegriff von Anspruch 1. Die Erfindung betrifft auch ein Kraftfahrzeug mit einer Brennkraftmaschine und mit wenigstens einer solchen Abgasnachbehandlungsvorrichtung nach Anspruch 21.

Gehäuseschalen solcher Abgasnachbehandlungsvorrichtung hausen meist Schalldämpfer, Rußfilter und/oder Katalysatoren wie einen Oxidationskatalysator und/oder einen Reduktionskatalysator.

Aus DE 102 43 644 A1 ist eine Abgasnachbehandlungsvorrichtung einer Brennkraftmaschine eines Kraftfahrzeugs bekannt, deren Gehäuseschalen durch eine lösbare Verbindung miteinander verbunden sind, bei welcher eine Gehäuseschale einen umlaufenden Zentrierkragen aufweist, welcher die andere Gehäuseschale untergreift. Zum Lösen der Verbindung muss dann unter anderem die eine Gehäuseschale gegenüber der anderen Gehäuseschale in axialer Richtung bzw. in Längsrichtung verschoben werden. Aufgrund beengter Bauraumverhältnisse bei Gehäuseschalen von Schalldämpfern, Rußfiltern, Katalysatoren oder von Kraftstofftanks von Fahrzeugen kann es allerdings vorkommen, dass eine solche Axialbewegung eingeschränkt bzw. überhaupt nicht möglich ist.

Aus diesem Grund schlagen die gattungsbildende EP 1 686 303 A1 bzw. deren prioritätsbegründende DE 20 2005 001 616 U1 vor, die Gehäuseschalen mittels wenigstens eines Zentrierrings gegeneinander zu zentrieren und mit Spannmitteln miteinander zu verbinden, wobei der Zentrierring eine Bewegung in einer Montagebene der Gehäuseschalen, insbesondere in radialer Richtung erlaubt. Genauer ist dort eine mittlere Gehäuseschale zwischen zwei weiteren Gehäuseschalen jeweils mittels eines solchen Zentrierrings zentriert und durch über die Enden gespannte Spannmittel gehalten. Dadurch entsteht ein Verband von seriell hintereinander angeordneten Gehäuseschalen. Dabei kann die mittlere Gehäuseschale nach einem Lösen der Spannmittel aus dem Verband seitlich, d.h. in radialer Richtung herausgezogen werden, ohne dass hierzu eine axiale Verlagerung der anderen Gehäuseschalen notwendig wäre.

Bei Abgasnachbehandlungsvorrichtung von Brennkraftmaschinen von Kraftfahrzeugen spielt die Schwingungsbelastung der Abgasnachbehandlungsvorrichtung im Betrieb eine wichtige Rolle, da solche Schwingungen zu Verformungsbelastungen und damit auch zu einer vorzeitigen Materialermüdung vor allem im Gehäuse der Abgasnachbehandlungsvorrichtung führen können.

WO 2008/030639 A2 offenbart eine Abgasnachbehandlungsvorrichtung mit einer im Querschnitt U-Förmigen ersten Gehäusekomponente, zwischen deren Schenkel eine zweite Gehäusekomponente lösbar befestigt ist, welche einen Dieselpartikelfilter (DPF) haust. Zum axialen Toleranzausgleich und zur Abdichtung ist das Ende der zweiten Gehäusekomponente von einer hülsenförmigen Dichtungsvorrichtung umgeben, welche andererseits durch einen Spannring mit dem gegenüberliegenden Ende des Schenkels der ersten Gehäusekomponente verspannt ist. Die hülsenförmige Dichtungsvorrichtung ist auf dem Ende der zweiten Gehäusekomponente gleitbar ausgeführt und trägt zwei axial hintereinander angeordnete ringförmige Dichtungselemente, was einen gewissen konstruktiven Aufwand erfordert. Weiterhin ist zwischen den beiden Enden der beiden Gehäusekomponenten ein lichter axialer Toleranzspalt vorgesehen, der das Problem mit sich bringt, dass es infolge von beim Betrieb von Brennkraftmaschinen und Fahrzeugen üblichen Schwingungen zu ungewollten axialen Verlagerungen der zweiten Gehäusekomponente in Bezug zur ersten Gehäusekomponente kommen kann.

Der Erfindung liegt demgegenüber die Aufgabe zugrunde, eine Abgasnachbehandlungsvorrichtung der eingangserwähnten Art derart fortzubilden, dass sie mit geringem Aufwand eine gute Abdichtung gewährleistet sowie eine geringe Neigung zur Ausbildung von Schwingungen aufweist. Ebenso soll ein Kraftfahrzeug mit einer solchen Abgasnachbehandlungsvorrichtung zur Verfügung gestellt werden.

Diese Aufgabe wird erfindungsgemäß durch die Merkmale von Anspruch 1 und Anspruch 21 gelöst.

### Offenbarung der Erfindung

Die Erfindung geht aus von einer Abgasnachbehandlungsvorrichtung einer Brennkraftmaschine eines Kraftfahrzeugs, welche einen über eine Einlassöffnung eingeführten Abgasstrom wenigstens teilweise von Schadstoffen befreit und ihn dann über eine Auslassöffnung in die Atmosphäre leitet und welche ein Gehäuse mit mehreren Gehäuseschalen aufweist, wobei von den Gehäuseschalen wenigstens eine erste Gehäuseschale mit wenigstens einer zweiten Gehäuseschale durch wenigstens eine lösbare Verbindung verbunden ist, die lösbare Verbindung wenigstens einen Zentrierring umfasst, über welchen sich die Gehäuseschalen in einer Montageebene einander indirekt kontaktieren, der wenigstens eine Zentrierring ein von den Gehäuseschalen getrenntes separates Bauteil darstellt, der wenigstens eine Zentrierring einen inneren Zentrierkragen, einen Enden der Gehäuseschalen zwischengeordneten Mittelabschnitt sowie einen äußeren Zentrierkragen aufweist, der innere Zentrierkragen an einer radial inneren Umfangsfläche der ersten Gehäuseschale und der äußere Zentrierkragen an einer radial äußeren Umfangsfläche der zweiten Gehäuseschale zur Anlage vorgesehen ist oder der innere Zentrierkragen an einer radial inneren Umfangsfläche der zweiten Gehäuseschale und der äußere Zentrierkragen an einer radial äußeren Umfangsfläche der ersten Gehäuseschale zur Anlage vorgesehen ist, bezogen auf den Umfang des wenigstens einen Zentrierrings der äußere Zentrierkragen eine derartige Umfangsausnehmung aufweist, dass zu Montage- und Demontagezwecken die erste Gehäuseschale und die zweite Gehäuseschale relativ zueinander entlang der Montageebene bewegbar und voneinander lösbar sind.

Unter einer Gehäuseschale ist jegliches Gehäusebauteil des Gehäuses der Abgasnachbehandlungsvorrichtung zu verstehen, welches irgendeine Baugruppe oder irgendein Bauelement der Abgasnachbehandlungsvorrichtung wenigstens teilweise haust oder in sich aufnimmt, durch welches die Qualität und/oder die Quantität des Abgasstroms beeinflusst wird, insbesondere im Hinblick auf darin enthaltene Schadstoffe und/oder durch welches irgendeine andere den Abgasstrom beeinflussende Funktion ausgeübt wird, z.B. eine Richtungslenkung des Abgasstroms (Drallerzeugung, Strömungsumlenkung) oder ihn mit Zusatzstoffen wie Harnstofflösung mischt bzw. Schalldämpfung des vom Abgasstrom erzeugten Schalls. Dabei können die erste Gehäuseschale und die zweite Gehäuseschale einstückig oder auch mehrteilig ausgebildet sein.

Dass der wenigstens eine Zentrierring ein von den Gehäuseschalen getrenntes, separates Bauteil darstellt, bedingt eine einfache Konstruktion und Montage, da der Zentrierring nicht mit einer Gehäuseschale beispielsweise durch Schweißung verbunden werden muss, sondern lediglich durch Einlegen des inneren Zentrierkragens in eine Gehäuseschale und Quereinschub einer anderen Gehäuseschale montiert werden kann.

Dabei sind die erste Gehäuseschale und die zweite Gehäuseschale mittels des wenigstens einen Zentrierrings gegeneinander zentriert und beispielsweise mit Spannmitteln miteinander verbunden, wobei der Zentrierring eine Relativbewegung der Gehäuseschalen in der Montagebene der Gehäuseschalen gestattet.

Die Umfangsausnehmung oder Umfangsbegrenzung des äußeren Zentrierkragens ermöglicht, dass die Gehäuseschalen zur Montage und zur Demontage des Gehäuses bzw. zum Auswechseln der ersten Gehäuseschale gegen eine neue erste Gehäuseschale entlang der Montageebene und insbesondere ohne Verlagerung senkrecht zur Montageebene relativ zueinander bewegt werden können, indem beispielsweise ein Ende einer Gehäuseschale, an deren äußerer Umfangsfläche ein äußerer Zentrierkragen anliegt durch die Umfangsausnehmung hindurch entlang der Montagebene gezogen wird. Dabei reicht der im Umfang begrenzte äußere Zentrierkragen aus, um die Gehäuseschalen in Einbaulage gegeneinander zu zentrieren.

Die Montagebene ist daher als eine Ebene definiert, entlang welcher oder parallel zu welcher die erste Gehäuseschale und die zweite Gehäuseschale relativ zueinander bewegbar sind, auch wenn der wenigstens eine Zentrierring an der ersten Gehäuseschale und an der zweiten Gehäuseschale bereits montiert ist. Wenn dann die Enden der Gehäuseschalen zusätzlich von einem Spannmittel übergriffen sind, ergibt sich eine relativ steife Verbindung der Gehäuseschalen.

Zur Verbesserung der Formsteifigkeit der Abgasnachbehandlungsvorrichtung ist erfindungsgemäß vorgesehen, dass die zweite Gehäuseschale einen im Querschnitt gesehen U-förmigen Querschnitt mit zwei einen Quersteg miteinander verbindenden Schenkeln aufweist, einen ersten Schenkel und einen zweiten Schenkel. Die beiden Schenkel ragen beispielsweise senkrecht von den Enden des Querstegs weg.

Die Stoßflächen und Strömungsverbindungen zwischen dem Quersteg und dem ersten Schenkel sowie zwischen dem Quersteg und dem zweiten Schenkel liegen beispielsweise jeweils bevorzugt in einer Ebene, welche senkrecht zu einer Mittelachse der ersten Gehäuseschale ist.

Die erste Gehäuseschale ist dabei zwischen dem ersten und dem zweiten Schenkel der zweiten Gehäuseschale durch zwei lösbare Verbindungen gehalten, nämlich einer ersten lösbaren Verbindung und einer zweiten lösbaren Verbindung.

Dabei kontaktiert ein erstes Ende der ersten Gehäuseschale den ersten Schenkel der zweiten Gehäuseschale über einen ersten Zentrierring und ein zweites Ende der ersten Gehäuseschale den zweiten Schenkel der zweiten Gehäuseschale über einen zweiten Zentrierring indirekt. Der erste Zentrierring ist dann ein Bestandteil der ersten lösbaren Verbindung und der zweite Zentrierring ein Bestandteil der zweiten lösbaren Verbindung.

Damit ergibt sich ein geschlossener Kraftfluss, welcher entlang des ersten Schenkels, der ersten Gehäuseschale, des zweiten Schenkels und des Querstegs umläuft. Diese Maßnahmen bedingen daher eine äußerst hohe Formsteifigkeit der Abgasnachbehandlungsvorrichtung, obwohl die erste Gehäuseschale mittels der lösbaren Verbindung von der zweiten Gehäuseschale lösbar ausgebildet ist und insbesondere parallel zur Montageebene zwischen den Schenkeln der zweiten Gehäuseschale herausgezogen werden kann, um sie beispielsweise gegen eine neue erste Gehäuseschale auszuwechseln. Eine solche Auswechslung der ersten Gehäuseschale kann beispielsweise notwendig sein, wenn diese einen Partikelfilter haust und dieser nach einiger Betriebszeit ausgewechselt werden muss. Die hohe Formsteifigkeit der erfindungsgemäßen Abgasnachbehandlungsvorrichtung bedingt wegen der geringeren Schwingungsbelastung der Gehäuseschalen eine höhere Lebensdauer.

Erfindungsgemäß ist in einer Mantelwand im Bereich wenigstens eines Endes einer Gehäuseschale wenigstens eine Falte oder Sicke derart ausgebildet, dass die Mantelwand in diesem Bereich elastisch verformbar ist. Dies erlaubt einen Toleranzausgleich, wenn z.B. ein kleiner Winkel- oder Achsfehler zwischen den verbundenen Enden der ersten Gehäuseschale und der zweiten Gehäuseschale vorliegt.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt weisen der erste Zentrierring und der zweite Zentrierring jeweils einen kreisförmigen Querschnitt auf, wobei sich der äußere Zentrierkragen jeweils bis höchstens über den halben Umfang des jeweiligen Zentrierrings erstreckt. Dabei weist die erste Gehäuseschale ebenfalls bevorzugt einen zylindrischen Querschnitt auf.

Gemäß einer Weiterbildung kann sich der innere Zentrierkragen über den gesamten Umfang des jeweiligen Zentrierrings erstrecken und dabei in Umfangsrichtung gesehen mit Umfangslücken versehen oder ohne Umfangslücken ausgebildet sein. Ohne Umfangslücken bedeutet, dass der innere Zentrierkragen ohne Unterbrechung vollständig umläuft. Alternativ kann der innere Zentrierkragen lediglich abschnittsweise ausgebildet sein und dabei auch insbesondere auch Umfangslücken aufweisen.

Bevorzugt ist zwischen dem Mittelabschnitt eines Zentrierrings und einer zu dem Mittelabschnitt weisenden Ende der ersten Gehäuseschale sowie zwischen dem Mittelabschnitt des Zentrierrings und einer zu dem Mittelabschnitt weisenden Ende der zweiten Gehäuseschale jeweils eine Dichtung vorgesehen.

Gemäß einer Ausführungsform kann der erste Schenkel der zweiten Gehäuseschale einen ersten senkrecht zu einer ersten Montagebene angeordneten und mit wenigstens einer ersten Strömungsöffnung versehenen Stutzen und der zweite Schenkel der zweiten Gehäuseschale einen zweiten senkrecht zu einer zweiten Montagebene angeordneten und mit wenigstens einer zweiten Strömungsöffnung versehenen Stutzen aufweisen.

Die beiden Stutzen sind beispielsweise jeweils zylindrisch mit kreisförmigem Querschnitt ausgebildet und koaxial zueinander angeordnet, wobei ihre Strömungsöffnungen zueinander weisen. Außerdem weisen ihre freien, zueinander weisen Enden beispielsweise einen identischen Durchmesser auf. Dabei ist der Durchmesser wenigstens im Bereich der freien Enden der Stutzen auch beispielsweise identisch mit dem Durchmesser des ersten Endes der ersten Gehäuseschale und des zweiten Endes der ersten Gehäuseschale.

Alternativ könnte der Durchmesser im Bereich des freien Endes des ersten Stutzens auch beispielsweise unterschiedlich in Bezug zu dem Durchmesser im Bereich des freien Endes des zweiten Stutzens sein, wobei dann auch der Durchmesser im Bereich des ersten Endes der ersten Gehäuseschale in Bezug zu dem Durchmesser im Bereich des zweiten Endes der ersten Gehäuseschale unterschiedlich groß ist, weil das freie Endes des ersten Stutzens mit dem ersten Ende der ersten Gehäuseschale und das freie Ende des zweiten Stutzens mit dem zweiten Ende der ersten Gehäuseschale verbunden ist.

Die erste Gehäuseschale ist bevorzugt an ihren beiden Enden in Bezug auf die beiden Stutzen koaxial in der zweiten Gehäuseschale gehalten. Die beiden Montageebenen sind bevorzugt parallel zueinander.

Die Mittelabschnitte der Zentrierringe sind bevorzugt senkrecht zur Mittelachse der Stutzen bzw. der ersten Gehäuseschale und in den Montageebenen angeordnet, während der innere Zentrierkragen und der äußere Zentrierkragen beispielsweise zylindrisch ausgebildet und koaxial in Bezug zu der Mittelachse sind.

Gemäß einer Weiterbildung dieser Ausführungsform kann dann der erste Zentrierring zwischen einem freien Ende des ersten Stutzens und einem ersten Ende der ersten Gehäuseschale und der zweite Zentrierring zwischen einem zweiten Ende der ersten Gehäuseschale und einem freien Ende des zweiten Stutzens der zweiten Gehäuseschale angeordnet sein.

Dabei können die lösbaren Verbindungen zwei Spannmittel umfassen, von welchen ein erstes Spannmittel das freie Ende des ersten Stutzens und das erste Ende der ersten Gehäuseschale und ein zweites Spannmittel das freie Ende des zweiten Stutzens und das zweite Ende der ersten Gehäuseschale gegeneinander spannt und dadurch zum einen die Lage der den Enden zwischengeordneten Zentrierringe fixiert und zum andern die Enden jeweils miteinander verbindet.

Insbesondere können das freie Ende des ersten Stutzens, das erste Ende der ersten Gehäuseschale, das zweite Ende der ersten Gehäuseschale sowie das freie Ende des zweiten Stutzens der zweiten Gehäuseschale jeweils eine wenigstens einen Teilkreis beschreibende und nach außen ragende Bördelung oder Einrollung aufweisen.

Gemäß einer Weiterbildung dieser Maßnahme kann dann der Mittelabschnitt eines Zentrierrings im Wesentlichen in der Montageebene verlaufen und diese Bördelungen oder Einrollungen indirekt oder direkt linienartig kontaktieren.

Die mit Bördelungen oder Einrollungen am Ende versehenen Gehäuseschalen sind außerdem in vorteilhafter Weise nach Art eines Baukastens jeweils untereinander beliebig kombinierbar, weil die Kontaktflächen jeweils identisch ausgebildet sind und in jedem Fall eine Linienberührung gegeben ist.

Damit dient ein Zentrierring zugleich auch als Dichtungsträger. Dabei können die bevorzugt flachen oder geraden Mittelabschnitte der Zentrierringe im Wesentlichen in den Montageebenen verlaufen und beidseitig jeweils wenigstens eine Bördelungen oder Einrollung linienartig direkt oder indirekt über die Dichtungen kontaktieren. Durch die Linienberührung im Kontaktbereich zwischen den Dichtungen und den Einrollungen oder Bördelungen bildet sich eine Dichtkante aus, welche aufgrund der relativ hohen Pressung entlang der Kontaktlinie besser dichtet wie dies etwa bei einer flächigen Berührung der Fall ist. Die Ausbildung einer Dichtkante ist insbesondere bei Verwendung von elastischen Dichtungen von Vorteil, weil wegen der höheren Pressung im Dichtspalt kleinere Spannkräfte ausreichen. Als Dichtelemente können günstige, handelsübliche Formdichtungen wie Flachdichtungen verwendet werden.

Die Bördelungen oder Einrollungen können dann den flachen oder geraden Mittelabschnitt eines Zentrierrings entlang einer Linie kontaktieren und sind auf einfache und günstige Weise durch Rollieren herstellbar. Darüber hinaus sind sie wegen ihrer hohen Gestaltsteifigkeit oder Formstabilität relativ unempfindlich gegenüber mechanischen Einwirkungen. Weiterhin ist die Lage der Berührungslinie für die Dichtfunktion nicht von Bedeutung, so dass die erfindungsgemäße Verbindung fehlertolerant ist. Dies ist gerade bei Abgasnachbehandlungsvorrichtungen von besonderem Vorteil, welche fertigungsbedingt relativ große Toleranzen aufweisen. Außerdem ist wegen der Linienberührung eine äußerst kleine Kontaktfläche zwischen den Gehäuseschalen und den Mittelabschnitten der Zentrierringe vorhanden ist, so dass wegen der reduzierten Kontaktfläche weniger Tendenz besteht, dass die Bauteile aufgrund von Kontaktkorrosion zusammenhaften und sich nur schwer oder überhaupt nicht mehr voneinander lösen lassen.

Damit erfüllen die Bördelungen oder Einrollungen eine Mehrfachfunktion, indem sie einerseits die bereits oben erwähnte, vorteilhafte Linienberührung sicherstellen, als Dichtflächen wirken und die Formsteifigkeit der Enden der Gehäuseschalen erhöhen.

Bevorzugt umfasst die lösbare Verbindung ein Spannmittel mit kegelstumpfförmigem Querschnitt, welches die Bördelungen oder Einrollungen durch Übergriff gegeneinander spannt. Um die beiden Gehäuseschalen fest miteinander zu verbinden, sind vorzugsweise die Bördelungen oder Einrollungen der Enden der Gehäuseschalen durch Übergriff beispielsweise eines Spannbands mit kegelstumpfförmigem Querschnitt gegeneinander gespannt. Durch Verkürzen eines beispielsweise in einer Montageebene der Gehäuseschalen angeordneten Spannbands werden die im Wesentlichen kreisrunden Einrollungen oder Bördelungen in den kegelförmigen Querschnitt des Spannbandes gedrückt, wodurch die beiden Gehäuseschalen gegeneinander gespannt und miteinander formschlüssig verbunden werden.

Bevorzugt ist zwischen dem ersten Schenkel der zweiten Gehäuseschale und der ersten Gehäuseschale und zwischen der ersten Gehäuseschale und dem zweiten Schenkel der zweiten Gehäuseschale jeweils wenigstens eine Abgasströmungsverbindung vorhanden.

Weiterhin kann zwischen dem Quersteg der zweiten Gehäuseschale und dem ersten Schenkel der zweiten Gehäuseschale sowie zwischen dem Quersteg der zweiten Gehäuseschale und dem zweiten Schenkel der zweiten Gehäuseschale jeweils wenigstens eine Abgasströmungsverbindung vorhanden sein.

Besonders bevorzugt bestehen der Quersteg und die beiden Schenkel der zweiten Gehäuseschale aus Stahlblech und sind miteinander verschweißt.

Ganz besonders bevorzugt haust die erste Gehäuseschale wenigstens einen Dieselpartikelfilter (DPF) und die zweite Gehäuseschale in Strömungsrichtung des Abgasstroms gesehen wenigstens einen Oxidationskatalysator (DOC), eine Mischvorrichtung zum Einbringen eines Reduktionsmittels in den Abgasstrom und wenigstens einen Reduktionskatalysator (SCR).

Dabei können der Oxidationskatalysator (DOC) in dem ersten Schenkel, die Mischvorrichtung in dem zweiten Schenkel und in dem Quersteg und der Reduktionskatalysator (SCR) in dem Quersteg gehaust sein.

Gemäß einer Fortbildung kann der Quersteg zwei voneinander getrennte Querstegfluten aufweisen, wobei in einer ersten Querstegflut ein Teil der Mischvorrichtung und in einer zweiten, parallel zur ersten Querstegflut angeordneten Querstegflut der Reduktionskatalysator angeordnet ist.

Insbesondere können die Abgaseinlassöffnung und die Abgasauslassöffnung in der zweiten Gehäuseschale ausgebildet sein, wobei die Abgaseinlassöffnung beispielsweise in dem ersten Schenkel und die Abgasauslassöffnung in dem zweiten Schenkel der zweiten Gehäuseschale ausgebildet ist.

Gemäß einer besonders zu bevorzugenden Maßnahme kann die zweite Gehäuseschale wenigstens ein Befestigungsmittel zur Befestigung an einem Rahmen oder einer tragenden Struktur des Fahrzeugs aufweisen.

Eine besonders steife Ausführung der Abgasnachbehandlungsvorrichtung ergibt sich, wenn ein erstes Befestigungsmittel an einer von der ersten Gehäuseschale weg weisenden Fläche des ersten Schenkels der zweiten Gehäuseschale und ein zweites Befestigungsmittel an einer von der ersten Gehäuseschale weg weisenden Fläche des zweiten Schenkels der zweiten Gehäuseschale ausgebildet ist. Dann ist die Abgasnachbehandlungsvorrichtung an dem Rahmen oder an der tragenden Struktur des Kraftfahrzeugs zweifach und zweiseitig befestigt.

Die Erfindung betrifft auch mit einer Brennkraftmaschine und mit wenigstens einer oben beschriebenen Abgasnachbehandlungsvorrichtung.

### Zeichnungen

Ausführungsbeispiele der Erfindung sind in der Zeichnung dargestellt und in der nachfolgenden Beschreibung näher erläutert. In der Zeichnung zeigt
- Fig. 1: eine perspektivische Darstellung einer bevorzugten Ausführungsform einer Abgasnachbehandlungsvorrichtung einer Brennkraftmaschine eines Nutzfahrzeugs, wobei eine erste Gehäuseschale und eine zweite Gehäuseschale durch lösbare Verbindungen miteinander verbunden sind;
- Fig.2: eine Querschnittsdarstellung entlang der Linie II - II von Fig.1;
- Fig.3: eine Querschnittsdarstellung entlang der Linie III - III von Fig.1;
- Fig.4: die perspektivische Darstellung von Fig.1, wobei die erste Gehäuseschale aus der zweiten Gehäuseschale nach einem Lösen der lösbaren Verbindungen herausgezogen wird;
- Fig.5: eine vergrößerte Ansicht eines Ausschnitts von Fig.1;
- Fig.6: eine vergrößerte Ansicht eines Ausschnitts einer weiteren Ausführungsform der Abgasnachbehandlungsvorrichtung;
- Fig.7: eine vergrößerte Ansicht eines Ausschnitts von Fig.1;
- Fig.8: eine Seitenansicht eines Zentrierrings einer lösbaren Verbindung;
- Fig.9: eine Vorderansicht des Zentrierrings von Fig.8;
- Fig.10: eine vergrößerte Ansicht eines Ausschnitts aus Fig.8.

### Beschreibung der Ausführungsbeispiele

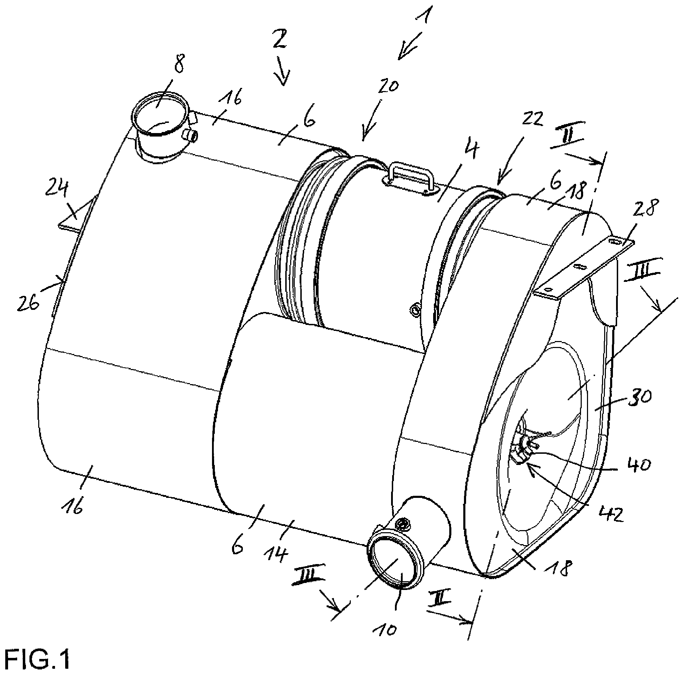

Im bevorzugten Ausführungsbeispiel nach **Fig.1** umfasst eine Abgasnachbehandlungsvorrichtung 1 ein Gehäuse 2 mit einer beispielsweise zylindrischen ersten Gehäuseschale 4, welche beispielsweise einen Partikelfilter DPF haust oder aufnimmt und mit einer zweiten Gehäuseschale 6, in welcher eine Abgaseinlassöffnung 8 zur Einleitung von aus einer Diesel-Brennkraftmaschine eines Kraftfahrzeugs stammenden ungereinigten Abgase und eine Abgasauslassöffnung 10 zur Ableitung der von Schadstoffen wenigstens teilweise gereinigten Abgase aus der Abgasnachbehandlungsvorrichtung 1 in die Atmosphäre aufweist.

Die zweite Gehäuseschale 6 haust in Strömungsrichtung des Abgasstroms gesehen beispielsweise einen Oxidationskatalysator (DOC), eine Mischvorrichtung 12 zum Einbringen eines Reduktionsmittels in den Abgasstrom und wenigstens einen Reduktionskatalysator (SCR).

Die zweite Gehäuseschale 6 weist einen im Querschnitt gesehen U-förmigen Querschnitt mit zwei einen Quersteg 14 miteinander verbindenden Schenkeln auf, einen ersten Schenkel 16 und einen zweiten Schenkel 18, wobei die beiden Schenkel 16, 18 beispielsweise senkrecht von den Enden des Querstegs wegragen.

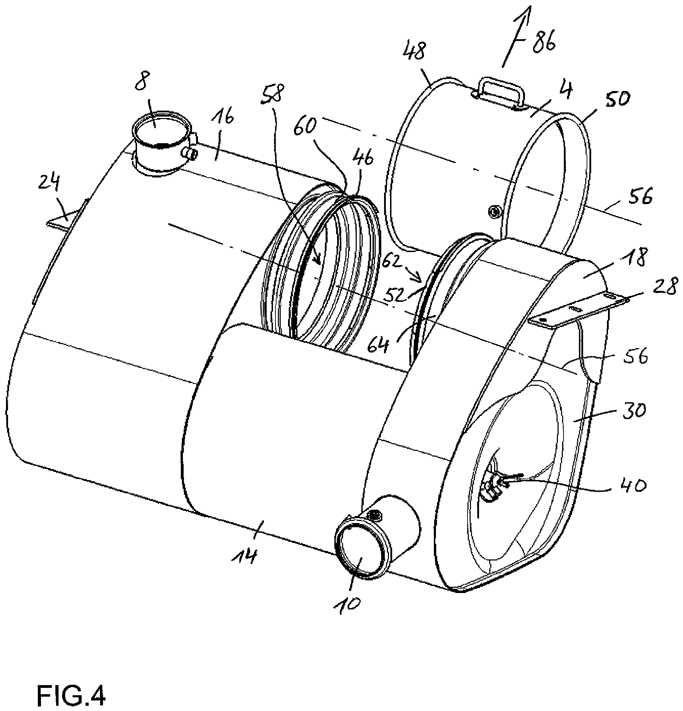

Die erste Gehäuseschale 4 ist zwischen dem ersten Schenkel 16 und dem zweiten Schenkel 18 der zweiten Gehäuseschale 2 durch zwei lösbare Verbindungen, einer ersten lösbaren Verbindung 20 und einer zweiten lösbaren Verbindung 22 lösbar gehalten. Besonders anhand von **Fig.4** ist der U-förmige Querschnitt der zweiten Gehäuseschale 6 gut sichtbar.

Dabei können beispielsweise der Oxidationskatalysator (DOC) in dem ersten Schenkel 16, die Mischvorrichtung 12 teilweise in dem zweiten Schenkel 18 und teilweise in dem Quersteg 14 und der Reduktionskatalysator (SCR) in dem Quersteg 14 gehaust sein. Die Gehäuseschalen 4, 6 sind bevorzugt aus Stahlblech gefertigt, wobei bei der zweiten Gehäuseschale 6 der Quersteg 14 mit den beiden Schenkeln 16, 18 bevorzugt verschweißt ist. Alternativ könnte auch eine andere stoffschlüssige oder unlösbare Verbindung oder auch eine lösbare Verbindung zwischen dem Quersteg 14 und den beiden Schenkeln 16, 18 vorgesehen sein, beispielsweise eine Verschraubung.

Ein erstes Befestigungsmittel 24, beispielsweise in Form eines Montagewinkels ist an einer von der ersten Gehäuseschale 4 weg weisenden Seitenfläche 26 des ersten Schenkels 16 der zweiten Gehäuseschale 6 und ein zweites Befestigungsmittel 28, beispielsweise ebenfalls in Form eines Montagewinkels an einer von der ersten Gehäuseschale 4 weg weisenden Seitenfläche 30 des zweiten Schenkels 18 der zweiten Gehäuseschale 6 befestigt, beispielsweise durch Schweißung. Die vom Gehäuse 2 beispielsweise senkrecht weg ragenden Schenkel der Befestigungsmittel 24, 28 (Montagewinkel) weisen hier beispielsweise Schraublöcher zum Anschrauben der beiden Schenkel 16, 18 an einen Rahmen des Nutzfahrzeugs auf.

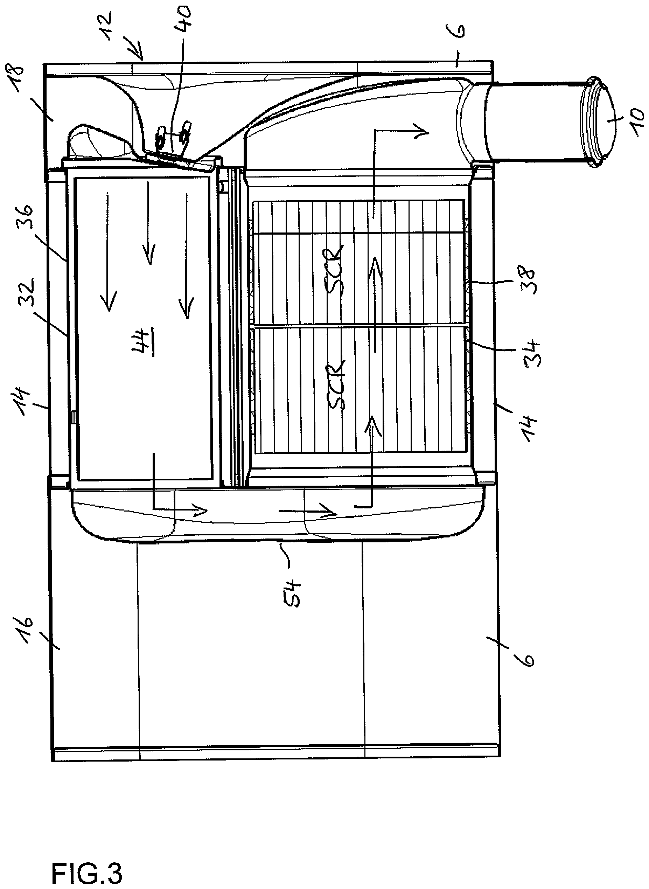

Wie aus **Fig.3** hervorgeht, kann der Quersteg 14 zwei voneinander getrennte Querstegfluten aufweisen, wobei in einer ersten Querstegflut 32 ein Teil der Mischvorrichtung 12 und in einer zweiten, parallel zur ersten Querstegflut 32 angeordneten Querstegflut 34 der Reduktionskatalysator SCR angeordnet ist. Die beiden Querstegfluten 32, 34 weisen jeweils beispielsweise jeweils eine innere Gehäuseschale 36, 38 auf, welche dann innerhalb des Querstegs 14 angeordnet und gehalten sind.

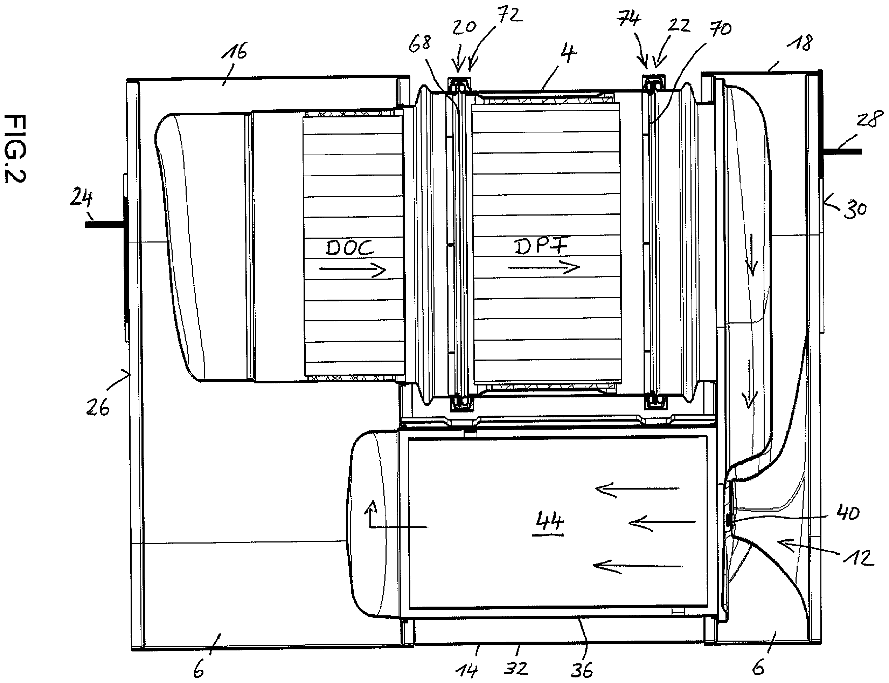

Die Mischvorrichtung 12 weist eine Einspritzeinrichtung 40 zur Einspritzung von Harnstofflösung in den Abgasstrom auf, welche hier beispielsweise von außen in eine hierfür im zweiten Schenkel 18 vorgesehene und koaxial zur ersten Querstegflut 32 angeordnete Öffnung 42 eingeführt und dort gehalten ist (**Fig.2**), um die Harnstofflösung in eine in der ersten Querstegflut 32 ausgebildete Mischstrecke 44 einzuspritzen, entlang welcher eine Durchmischung der eingespritzten Harnstofflösung mit dem Abgasstrom stattfindet. Bereits in dem zweiten Schenkel 18 können bevorzugt drallbildende Mittel angeordnet sein, z.B. in Form von strömungsleitenden Schaufeln, welche den Abgasstrom vor dem Eintritt in die Mischstrecke 44 in Drall versetzen, um eine Durchmischung der Harnstofflösung mit dem Abgasstrom zu fördern.

Wie **Fig.2** illustriert, wird der durch die Abgaseinlassöffnung 8 im ersten Schenkel 16 in das Gehäuse 2 eingeleitete Abgasstrom zunächst durch den Oxidationskatalysator DOC geführt, welcher beispielsweise in dem ersten Schenkel 16 der zweiten Gehäuseschale 6 angeordnet ist. Anschließend gelangt der teilweise gereinigte Abgasstrom über eine Strömungsverbindung von einem freien Ende 46 des ersten Schenkels 16 in ein erstes Ende 48 der ersten Gehäuseschale 4, in welchem beispielsweise der Partikelfilter DPF untergebracht ist. Dieser sorgt für eine Filterung von in dem Abgasstrom mitströmenden Partikeln. Anschließend gelangt der weiterhin gereinigte Abgasstrom über eine weitere Strömungsverbindung zwischen einem zweiten Ende 50 der ersten Gehäuseschale 4 und einem freien Ende des zweiten Schenkels 18 der zweiten Gehäuseschale 6 in den zweiten Schenkel 18 und wird innerhalb des zweiten Schenkels 18 um ca. 90 Grad umgelenkt, um schließlich an einem Austrittsende des zweiten Schenkels 18 mittels einer bevorzugt dort angeordneten und in den Figuren nur schlecht zu erkennenden Drallerzeugungseinrichtung in Drall versetzt zu werden, bevor der in Drall versetzte Abgasstrom in ein Eintrittsende der ersten Querstegflut 32 des Querstegs 14 eintritt, in welcher die Mischstrecke 44 angeordnet ist. Im Laufe der Mischstrecke 44 vermischt sich dann die über die Einspritzeinrichtung 40 in die Mischstrecke 44 bevorzugt zentral und axial eingespritzte Harnstofflösung mit dem in Drall versetzten Abgasstrom.

Wie dann **Fig.3** zeigt, gelangt der mit der Harnstofflösung vermischte Abgasstrom dann über ein Auslassende der ersten Querstegflut 32 in eine Umlenkschale 54 innerhalb des ersten Schenkels 16, wo der Abgasstrom zweimal um ca. 90 Grad umgelenkt und in ein Einlassende der zweiten Querstegflut 34 eingeführt wird, in welcher der Reduktionskatalysator SCR untergebracht ist. Nach wenigstens teilweisem Entfernen von Stickoxiden aus dem Abgasstrom durch den Reduktionskatalysator SCR mittels selektiver katalytischer Reduktion wird dieser in ein Einlassende des zweiten Schenkels 18 der zweiten Gehäuseschale 6 ein- und von dort in die Abgasauslassöffnung 10 geleitet.

Die Stoßflächen und Strömungsverbindungen zwischen dem Quersteg 14 bzw. den beiden Querstegfluten 32, 34 und dem ersten Schenkel 16 sowie zwischen dem Quersteg 14 bzw. den beiden Querstegfluten 32, 34 und dem zweiten Schenkel 18 liegen jeweils bevorzugt in einer Ebene, welche senkrecht zu einer Mittelachse 56 der ersten Gehäuseschale 4 ist.

**Fig.4** zeigt die Situation, in welcher die erste Gehäuseschale 4 aus der zweiten Gehäuseschale 6 nach einem Lösen der beiden lösbaren Verbindungen 20, 22 herausgezogen wird. Dabei wird auch erkennbar, dass der erste Schenkel 16 der zweiten Gehäuseschale 6 einen ersten senkrecht zu seiner Schenkelmittelebene angeordneten und mit wenigstens einer ersten Strömungsöffnung 58 versehenen Stutzen 60 und der zweite Schenkel 18 der zweiten Gehäuseschale 6 einen zweiten senkrecht zu seiner Schenkelmittelebene angeordneten und mit einer zweiten Strömungsöffnung 62 versehenen Stutzen 64 aufweisen. Die beiden Stutzen 60, 64 sind jeweils zylindrisch mit kreisförmigem Querschnitt ausgebildet und sind koaxial in Bezug auf die Mittelachse 56 der ersten Gehäuseschale angeordnet, wobei die beiden Strömungsöffnungen 58, 62 zueinander weisen. Außerdem weisen die freien, zueinander weisen Enden 46, 52 der beiden Stutzen 60, 64 einen identischen Durchmesser auf. Weiterhin sind die Durchmesser wenigstens im Bereich der freien Enden 46, 52 der beiden Stutzen 60, 64 beispielsweise identisch mit dem Durchmesser des ersten Endes 48 der ersten Gehäuseschale 4 und des zweiten Endes 50 der ersten Gehäuseschale 4. Alternativ könnte der Durchmesser im Bereich des freien Endes 46 des ersten Stutzens 60 auch beispielsweise unterschiedlich in Bezug zu dem Durchmesser im Bereich des freien Endes 52 des zweiten Stutzens 64 sein, wobei dann auch der Durchmesser im Bereich des ersten Endes 48 der ersten Gehäuseschale 4 in Bezug zu dem Durchmesser im Bereich des zweiten Endes 50 der ersten Gehäuseschale 4 unterschiedlich groß ist, weil das freie Ende 46 des ersten Stutzens 60 mit dem ersten Ende 48 der ersten Gehäuseschale 4 und das freie Ende 52 des zweiten Stutzens 64 mit dem zweiten Ende 50 der ersten Gehäuseschale 4 verbunden ist. Die erste Gehäuseschale 4 ist an ihren beiden Enden 48, 50 in Bezug auf die beiden Stutzen 60, 64 bevorzugt koaxial in der zweiten Gehäuseschale 6 gehalten.

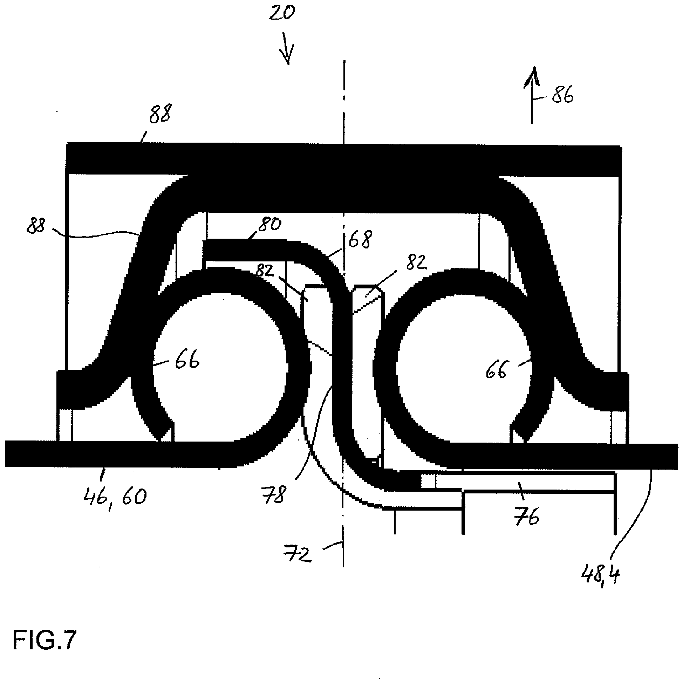

Wie insbesondere aus **Fig.7** hervorgeht, weisen das freie Ende 46 des ersten Stutzens 60, das erste Ende 48 der ersten Gehäuseschale 4, das zweite Ende 50 der ersten Gehäuseschale 4 sowie das freie Ende 52 des zweiten Stutzens 64 der zweiten Gehäuseschale 6 jeweils eine wenigstens einen Teilkreis beschreibende und nach radial außen ragende Bördelung 66 oder Einrollung auf.

Weiterhin kontaktieren das erste Ende 48 der ersten Gehäuseschale 4 das freie Ende 46 des ersten Stutzens 60 über einen ersten Zentrierring 68 und das zweite Ende 50 der ersten Gehäuseschale 4 das freie Ende 52 des zweiten Stutzens 64 über einen zweiten Zentrierring 70 hier beispielsweise indirekt.

**Fig.7** zeigt einen Querschnitt des ersten Zentrierrings 68 im Bereich des indirekten Stoßes des freien Endes 46 des ersten Stutzens 60 mit dem ersten Ende 48 der ersten Gehäuseschale 4 in einem in der Zeichnung oberen Bereich. Der Querschnitt des ersten Zentrierrings 68 im Bereich des zweiten Endes 50 der ersten Gehäuseschale 4 und des freien Endes 52 des zweiten Stutzens 64 ist dann symmetrisch in Bezug auf eine zur Mittelachse 56 senkrechten Mittelebene zwischen den beiden Stutzen 60, 64.

Daher umfasst die erste lösbare Verbindung 20 zwischen dem ersten Stutzen 60 und der ersten Gehäuseschale 4 den ersten Zentrierring 68 und die zweite lösbare Verbindung 22 zwischen dem zweiten Stutzen 64 und der ersten Gehäuseschale 4 den zweiten Zentrierring 70. Über die beiden Zentrierringe 68, 79 kontaktieren sich dann die beiden Gehäuseschalen 4, 6 in Montageebenen 72, 74 indirekt. Dabei stellen die beiden Zentrierringe 68, 70 von den Gehäuseschalen 4, 6 getrennte und separate Bauteil dar.

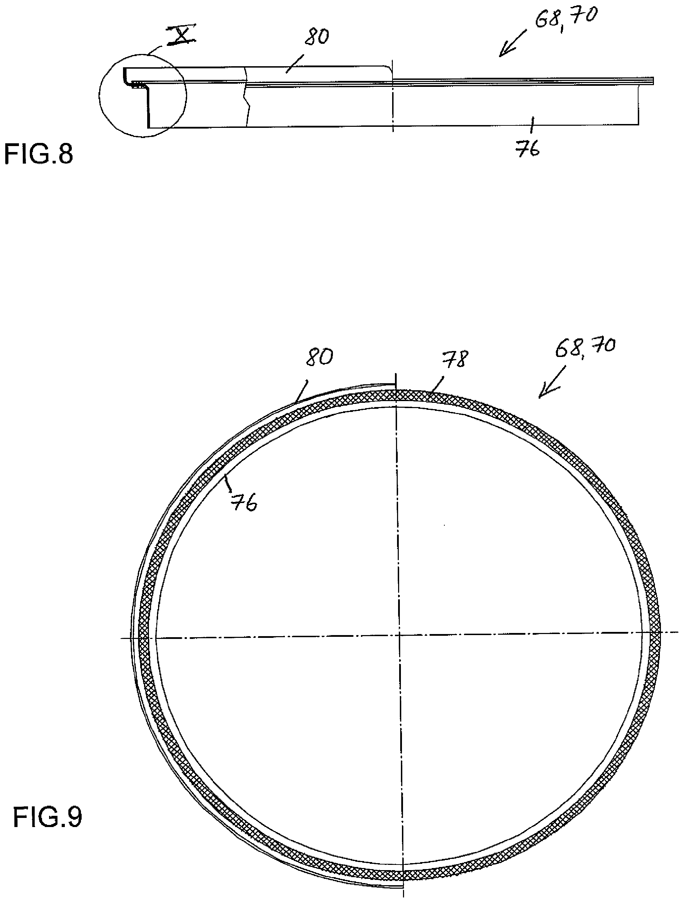

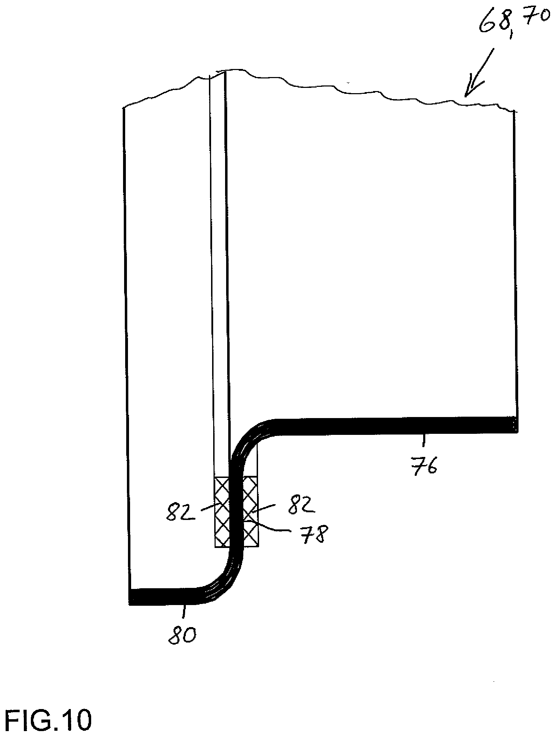

In **Fig.8** bis **Fig.10** ist stellvertretend für den zweiten Zentrierring 70 der erste Zentrierring 68 gezeigt, weil die beiden Zentrierringe 68, 70 identisch aufgebaut sind. Jeder der beiden Zentrierringe 68, 70 weist einen inneren Zentrierkragen 76, einen Mittelabschnitt 78 sowie einen äußeren Zentrierkragen 80 auf. Hier kann sich der innere Zentrierkragen 76 beispielsweise über den gesamten Umfang des Zentrierrings 68, 70 erstrecken und beispielsweise ohne Umfangslücken ausgebildet sein. Alternativ können auch in Umfangsrichtung gesehen Umfangslücken vorhanden sein. Alternativ kann der innere Zentrierkragen 80 in Umfangsrichtung gesehen lediglich abschnittsweise ausgebildet sein und dabei auch insbesondere auch Umfangslücken aufweisen. Der Mittelabschnitt 78 der Zentrierringe 68, 70 ist jeweils bevorzugt in einer Ebene senkrecht zur Mittelachse 56 der Stutzen 60, 64 bzw. der ersten Gehäuseschale 4 angeordnet, während der innere Zentrierkragen 76 und der äußere Zentrierkragen 80 jeweils als zylindrische Krägen ausgebildet und koaxial in Bezug zu dieser Mittelachse 56 sind.

Wie aus **Fig.7** hervorgeht, ist zwischen den Mittelabschnitten 78 der Zentrierringe 68, 70 und dem ersten Ende 48 bzw. dem zweiten Ende 50 der ersten Gehäuseschale 4 sowie zwischen diesen Mittelabschnitten 78 und den freien Ende 46, 52 der Stutzen 60, 64 jeweils eine Dichtung 82 z.B. in Form eines Dichtungsrings vorgesehen. Die Mittelabschnitte 78 der Zentrierringe 68, 70 verlaufen jeweils im Wesentlichen in einer zugeordneten Montageebene 72, 74.

Die Dichtungen 82 sind beispielsweise als Flachdichtungen ausgebildet, so dass sie tangential zu den kreisförmigen Umfangsflächen der Bördelungen oder Einrollungen 66 angeordnet sind und diese daher beidseitig linienhaft kontaktieren. Gleichfalls sind jedoch auch lösbare Verbindungen 20, 22 ohne zwischengeordnete Dichtungen 82 denkbar, bei welchen die Mittelabschnitte 78 der Zentrierringe 68, 70 jeweils die Einrollungen oder Bördelungen 66 direkt kontaktieren.

Weiterhin liegt bei der in **Fig.7** gezeigten ersten lösbaren Verbindung 20 der innere Zentrierkragen 76 des ersten Zentrierrings 68 an einer radial inneren Umfangsfläche der Wandung des ersten Endes 48 der ersten Gehäuseschale 4 und der äußere Zentrierkragen 80 an der radial äußeren Umfangsfläche der Wandung des freien Endes 46 des ersten Stutzens 60 bzw. an der dortigen Bördelung oder Einrollung 66 von radial außen an bzw. greift dort ein oder an.

Alternativ könnte auch bei einer um 180 Grad umgeschlagenen Montage des ersten Zentrierrings 68 der innere Zentrierkragen 76 an der radial inneren Umfangsfläche der Wandung des freien Endes 46 des ersten Stutzens 60 und der äußere Zentrierkragen 80 an einer radial äußeren Umfangsfläche der Wandung des ersten Endes 48 der ersten Gehäuseschale 4 und genauer außen an dessen Bördelung oder Einrollung 66 anliegen. Die Situation an dem zweiten Zentrierring 70 ist dann jeweils spiegelverkehrt.

Die beiden lösbaren Verbindungen 20, 22 beinhalten daher jeweils einen in **Fig.8** bis **Fig.10** in Einzeldarstellung gezeigten Zentrierring 68, 70. Bezogen auf den Umfang der Zentrierringe 68, 70 weist jeweils der äußere Zentrierkragen 80 eine derartige Umfangsausnehmung 84 auf, dass zu Montage- und Demontagezwecken die erste Gehäuseschale 4 und die zweite Gehäuseschale 6 relativ zueinander entlang der Montageebenen 72, 74 bewegbar und voneinander lösbar und wieder aneinander fügbar sind.

Weiterhin erstreckt sich der äußere Zentrierkragen 80 bezogen auf den gesamten Umfang eines Zentrierrings 68, 70 bis höchstens über den halben Umfang des betreffenden Zentrierrings 68, 70. Bevorzugt erstreckt sich der äußere Zentrierkragen 80 über einen Winkel von 180 Grad, wie aus **Fig.8** hervorgeht. Alternativ könnte er sich aber auch über einen kleineren Winkel als 180 Grad, beispielsweise über 160 Grad erstrecken.

Die Umfangsausnehmung 84 oder Umfangsbegrenzung des äußeren Zentrierkragens 80 ermöglicht, dass die beiden Gehäuseschalen 4, 6 zur Montage und zur Demontage des Gehäuses bzw. zum Auswechseln der ersten Gehäuseschale 4 gegen eine neue erste Gehäuseschale 4 entlang der Montageebenen 72, 74 und insbesondere ohne Verlagerung senkrecht zu den Montageebenen 72, 74 bzw. ohne Verlagerung entlang der Mittelachse 56 relativ zueinander bewegt werden können, indem beispielsweise die erste Gehäuseschale 4 zusammen mit dem ersten Zentrierring 68 und dem zweiten Zentrierring 70, deren innere Zentrierkrägen 76 ja umlaufend an der radial inneren Umfangsfläche der ersten Gehäuseschale anliegen in der in **Fig.4** und in **Fig.7** durch den Pfeil 86 angedeuteten Richtung aus der zweiten Gehäuseschale 6 entlang der Montagebenen72, 74 herausgezogen. Dabei geraten die Bördelungen oder Einrollungen 66 an den freien Enden 46, 52 der Stutzen 60, 64 durch die axial fluchtenden Umfangsausnehmungen 84 der Zentrierringe 68, 70 hindurch mit den Zentrierringen 68, 70 außer Eingriff.

Die Montagebenen 72, 74 sind daher als Ebenen definiert, entlang welcher oder parallel zu welcher die erste Gehäuseschale 4 und die zweite Gehäuseschale 6 relativ zueinander bewegbar sind, auch wenn die beiden Zentrierringe 68, 70 bereits montiert sind.

Mit anderen Worten weist jeweils ein äußerer Zentrierkragen 80 zur Montage und zum Lösen der zugeordneten lösbaren Verbindung 20, 22 eine Umfangsausnehmung 84 von derartiger Größe auf, dass eine von ihm kontaktierte Gehäuseschale 4 bzw. 6 in der betreffenden Montageebene 72, 74 ungehindert in Richtung der Umfangsausnehmung 84 bewegt werden kann, ohne dass die Gehäuseschale 4 bzw. 6 hierzu in Axialrichtung, d.h. senkrecht zur Montageebene 72, 74 bewegt werden müsste.

Da hier zwei Zentrierringe 68, 70 zwischen der ersten Gehäuseschale 4 und der zweiten Gehäuseschale 6 angeordnet sind müssen die Umfangsausnehmungen 84 der äußeren Zentrierkrägen 80 der beiden Zentrierringe 68, 70 in axialer Richtung d.h. parallel zur Mittelachse 56 gesehen miteinander fluchten. Dabei bestimmt die Lage der Umfangsausnehmung 84 im montierten Zustand eines Zentrierrings 68, 70 bezogen auf den gesamten Umfang die Einsetz- bzw. Ausziehrichtung der ersten Gehäuseschale 4 in Bezug zur zweiten Gehäuseschale 6 wie anhand von **Fig.8** leicht vorstellbar ist. Um daher eine Montage bzw. Demontage der ersten Gehäuseschale 4 zu ermöglichen, müssen die beiden Zentrierringe 68, 70 in einer Drehlage eingebaut werden, in welcher ihre Umfangsausnehmungen 84 in axialer Richtung gesehen im Wesentlichen fluchten und in eine gewünschte Montage- bzw. Demontagerichtung weisen.

Folglich kann wie in **Fig.4** durch den Pfeil 86 angedeutet, die erste Gehäuseschale 4 aus der zweiten Gehäuseschale 6 auch bei bereits montierten Zentrierringen 68, 70 aufgrund der Umfangsausnehmungen 84 herausgezogen bzw. in umgekehrter Richtung eingesetzt werden.

Bevorzugt umfassen die beiden lösbaren Verbindung 20, 22 zusätzlich je ein Spannmittel 88 mit kegelstumpfförmigem Querschnitt, welches die Bördelungen oder Einrollungen 66 einerseits an dem freien Ende 46 des ersten Stutzens und an dem ersten Ende 48 der ersten Gehäuseschale 4 und andererseits an dem freien Ende 52 des zweiten Stutzens 64 und an dem zweiten Ende 50 der ersten Gehäuseschale 4 durch Übergriff gegeneinander spannt. Hierzu wird beispielsweise jeweils ein Spannband 88 mit kegelstumpfförmigem Querschnitt verwendet. Durch Verkürzen der dann in den Montageebenen 72, 74 angeordneten Spannbänder 88 werden die im Wesentlichen kreisrunden Einrollungen oder Bördelungen 66 jeweils in den kegelförmigen Querschnitt je eines Spannbands 88 gedrückt, wodurch die beiden Gehäuseschalen 4, 6 gegeneinander gespannt und miteinander formschlüssig verbunden werden.

Die erste lösbare Verbindung 20 gewährleistet daher eine dichte Strömungsverbindung zwischen dem ersten Schenkel 16 der zweiten Gehäuseschale 6 und der ersten Gehäuseschale 4 und die zweite lösbare Verbindung 22 eine dichte Strömungsverbindung zwischen der ersten Gehäuseschale 4 und dem zweiten Schenkel 18 der zweiten Gehäuseschale 6, wobei lediglich durch ein Lösen der beiden Spannbänder 88 ein Herausziehen der ersten Gehäuseschale 4 aus der zweiten Gehäuseschale ermöglicht wird, wie in **Fig.4** gezeigt ist.

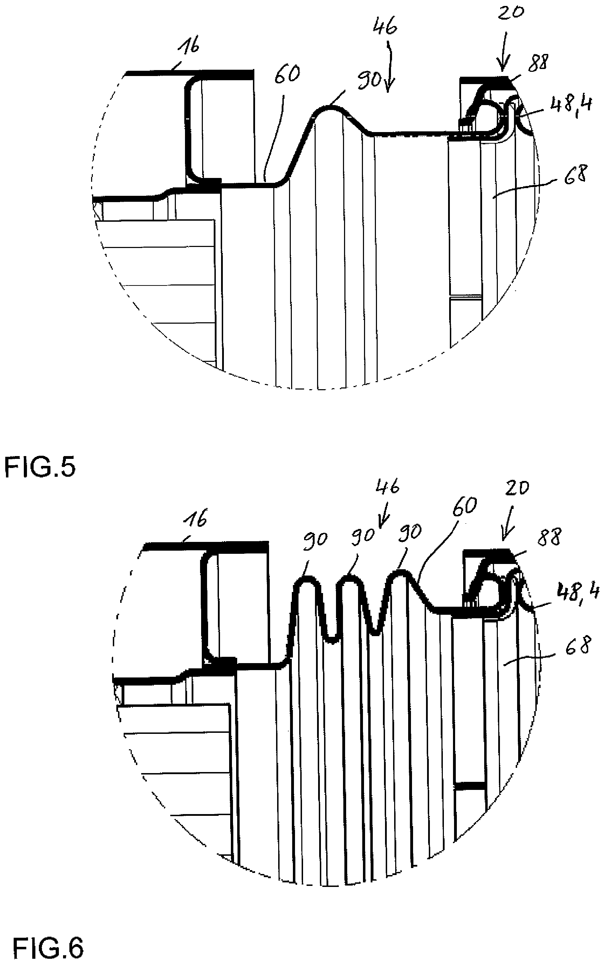

Wie aus **Fig.5** und **Fig.6** hervorgeht, können in den Mantelwände im Bereich der Enden 46, 52 beispielsweise der Stutzen 60, 64 wenigstens eine Falte oder Sicke 90 derart ausgebildet sein, dass diese Enden 46, 52 elastisch verformbar sind. Dies erlaubt einen Toleranzausgleich, wenn z.B. Winkel- oder Achsfehler zwischen der ersten Gehäuseschale 4 und den Stutzen 60, 64 vorliegen.

Es wird betont, dass die erste Gehäuseschale 4 und die zweite Gehäuseschale 6 beliebige Baugruppen und Elemente einer Abgasnachbehandlungsanordnung 1 hausen, beinhalten oder in sich aufnehmen können und dass die oben beschriebene Zuordnung bzw. Unterbringung von Baugruppen und Elementen der Abgasnachbehandlungsanordnung 1 zu bzw. in den jeweiligen Gehäuseschalen 4, 6 rein beispielhaft ist.

### Bezugszeichenliste

- 1: Abgasnachbehandlungseinrichtung
- 2: Gehäuse
- 4: erste Gehäuseschale
- 6: zweite Gehäuseschale
- 8: Abgaseinlassöffnung
- 10: Abgasauslassöffnung
- 12: Mischvorrichtung
- 14: Quersteg
- 16: erster Schenkel
- 18: zweiter Schenkel
- 20: erste lösbare Verbindung
- 22: zweite lösbare Verbindung
- 24: erstes Befestigungsmittel
- 26: Seitenfläche
- 28: zweites Befestigungsmittel
- 30: Seitenfläche
- 32: erste Querstegflut
- 34: zweite Querstegflut
- 36: Gehäuseschale
- 38: Gehäuseschale
- 40: Einspritzeinrichtung
- 42: Öffnung
- 44: Mischstrecke
- 46: freies Ende
- 48: erstes Ende
- 50: zweites Ende
- 52: freies Ende
- 54: Umlenkschale
- 56: Mittelachse
- 58: erste Strömungsöffnung
- 60: erster Stutzen
- 62: zweite Strömungsöffnung
- 64: zweiter Stutzen
- 66: Bördelungen
- 68: erster Zentrierring
- 70: zweiter Zentrierring
- 72: erste Montageebene
- 74: zweite Montageebene
- 76: innerer Zentrierkragen
- 78: Mittelabschnitt
- 80: äußerer Zentrierkragen
- 82: Dichtung
- 84: Umfangsausnehmung
- 86: Pfeil
- 88: Spannband
- 90: Falte

## Patentansprüche

1. Abgasnachbehandlungsvorrichtung (1) einer Brennkraftmaschine eines Kraftfahrzeugs, welche einen über eine Einlassöffnung (8) eingeführten Abgasstrom wenigstens teilweise von Schadstoffen befreit und ihn dann über eine Auslassöffnung (10) in die Atmosphäre leitet und welche ein Gehäuse (2) mit mehreren Gehäuseschalen (4, 6) aufweist, wobei
a) von den Gehäuseschalen (4, 6) wenigstens eine erste Gehäuseschale (4) mit wenigstens einer zweiten Gehäuseschale (6) durch wenigstens eine lösbare Verbindung (20, 22) verbunden ist,
b) die lösbare Verbindung (20, 22) wenigstens einen Zentrierring (68, 70) umfasst, über welchen sich die Gehäuseschalen (4, 6) in wenigstens einer Montageebene (72, 74) indirekt kontaktieren,
c) der wenigstens eine Zentrierring (68, 70) ein von den Gehäuseschalen (4, 6) getrenntes separates Bauteil darstellt,
d) der wenigstens eine Zentrierring (68, 70) einen inneren Zentrierkragen (76), einen Enden (46, 48, 50, 52) der Gehäuseschalen (4, 6) zwischengeordneten Mittelabschnitt (78) sowie einen äußeren Zentrierkragen (80) aufweist,
e) der innere Zentrierkragen (76) an einer inneren Umfangsfläche der ersten Gehäuseschale (4) und der äußere Zentrierkragen (80) an einer äußeren Umfangsfläche der zweiten Gehäuseschale (6) zur Anlage vorgesehen ist oder der innere Zentrierkragen (76) an einer inneren Umfangsfläche der zweiten Gehäuseschale (6) und der äußere Zentrierkragen (80) an einer äußeren Umfangsfläche der ersten Gehäuseschale (4) zur Anlage vorgesehen ist,
f) bezogen auf den Umfang des wenigstens einen Zentrierrings (68, 70) der äußere Zentrierkragen (80) eine derartige Umfangsausnehmung (84) aufweist, dass zu Montage- und Demontagezwecken die erste Gehäuseschale (4) und die zweite Gehäuseschale (6) relativ zueinander entlang der wenigstens einen Montageebene (72, 74) bewegbar und voneinander lösbar sind, **dadurch gekennzeichnet,** das
g) die zweite Gehäuseschale (6) einen im Querschnitt gesehen U-förmigen Querschnitt mit zwei einen Quersteg (14) miteinander verbindenden Schenkeln (16, 18) aufweist, einen ersten Schenkel (16) und einen zweiten Schenkel (18), wobei
h) die erste Gehäuseschale (4) zwischen dem ersten Schenkel (16) und dem zweiten Schenkel (18) der zweiten Gehäuseschale (6) durch jeweils eine lösbare Verbindung (20, 22) gehalten ist, und wobei
i) ein erstes Ende (48) der ersten Gehäuseschale (4) den ersten Schenkel (16) der zweiten Gehäuseschale (6) über einen ersten Zentrierring (68) und ein zweites Ende (50) der ersten Gehäuseschale (4) den zweiten Schenkel (18) der zweiten Gehäuseschale (6) über einen zweiten Zentrierring (70) indirekt kontaktiert, wobei
j) in einer Mantelwand im Bereich wenigstens eines Endes (46, 52) einer Gehäuseschale (6) wenigstens eine Falte oder Sicke (90) derart ausgebildet ist, dass die Mantelwand in diesem Bereich elastisch verformbar ist.

2. Abgasnachbehandlungsvorrichtung nach Anspruch 1, **dadurch gekennzeichnet, dass** der erste Zentrierring (68) und der zweite Zentrierring (70) jeweils einen kreisförmigen Querschnitt aufweisen, wobei sich der äußere Zentrierkragen (80) jeweils bis höchstens über den halben Umfang des Zentrierrings (68, 70) erstreckt.

3. Abgasnachbehandlungsvorrichtung nach Anspruch 2, **dadurch gekennzeichnet, dass** der innere Zentrierkragen (76) sich über den gesamten Umfang des Zentrierrings (68, 70) erstreckt und dabei in Umfangsrichtung gesehen mit Umfangslücken versehen oder ohne Umfangslücken ausgebildet ist.

4. Abgasnachbehandlungsvorrichtung nach einem der vorhergehenden Ansprüche, **dadurch gekennzeichnet, dass** zwischen dem Mittelabschnitt (78) eines Zentrierrings (68, 70) und einer zu dem Mittelabschnitt (78) weisenden Ende (48, 50) der ersten Gehäuseschale (4) sowie zwischen dem Mittelabschnitt (78) und einem zu dem Mittelabschnitt (78) weisenden Ende (46, 52) der zweiten Gehäuseschale (6) jeweils eine Dichtung (82) vorgesehen ist.

5. Abgasnachbehandlungsvorrichtung nach einem der vorhergehenden Ansprüche, **dadurch gekennzeichnet, dass** der erste Schenkel (16) der zweiten Gehäuseschale (6) einen ersten senkrecht zu einer ersten Montagebene (72) angeordneten und mit wenigstens einer ersten Strömungsöffnung (58) versehenen Stutzen (60) und der zweite Schenkel (18) der zweiten Gehäuseschale (6) einen zweiten senkrecht zu einer zweiten Montagebene (74) angeordneten und mit wenigstens einer zweiten Strömungsöffnung (62) versehenen Stutzen (64) aufweist.

6. Abgasnachbehandlungsvorrichtung nach Anspruch 5, **dadurch gekennzeichnet, dass** der erste Zentrierring (68) zwischen einem freien Ende (46) des ersten Stutzens (60) und einem ersten Ende (48) der ersten Gehäuseschale (4) und der zweite Zentrierring (70) zwischen einem zweiten Ende (50) der ersten Gehäuseschale (4) und einem freien Ende (52) des zweiten Stutzens (64) der zweiten Gehäuseschale (6) angeordnet ist.

7. Abgasnachbehandlungsvorrichtung nach Anspruch 6, **dadurch gekennzeichnet, dass** die lösbaren Verbindungen (20, 22) zwei Spannmittel (88) umfassen, von welchen ein Spannmittel das freie Ende (46) des ersten Stutzens (60) und das erste Ende (48) der ersten Gehäuseschale (4) und ein weiteres Spannmittel (88) das freie Ende (52) des zweiten Stutzens (64) und das zweite Ende (50) der ersten Gehäuseschale (4) gegeneinander spannt.

8. Abgasnachbehandlungsvorrichtung nach einem der vorhergehenden Ansprüche, **dadurch gekennzeichnet, dass** das freie Ende (46) des ersten Stutzens (60), das erste Ende (48) der ersten Gehäuseschale (4), das zweite Ende (50) der ersten Gehäuseschale (4) sowie das freie Ende (52) des zweiten Stutzens (64) der zweiten Gehäuseschale (6) jeweils wenigstens eine wenigstens einen Teilkreis beschreibende und nach außen ragende Bördelung oder Einrollung (66) aufweisen.

9. Abgasnachbehandlungsvorrichtung nach Anspruch 8, **dadurch gekennzeichnet, dass** die Mittelabschnitte (78) der Zentrierringe (68, 70) im Wesentlichen in den Montageebenen (72, 74) verlaufen und beidseitig jeweils wenigstens eine Bördelung oder Einrollung (66) linienartig kontaktiert.

10. Abgasnachbehandlungsvorrichtung nach Anspruch 8 oder 9, **dadurch gekennzeichnet, dass** die lösbaren Verbindungen (20, 22) jeweils ein Spannmittel (88) mit kegelstumpfförmigem Querschnitt umfasst, welches die Bördelungen oder Einrollungen (66) durch Übergriff gegeneinander spannt.

11. Abgasnachbehandlungsvorrichtung nach einem der vorhergehenden Ansprüche, **dadurch gekennzeichnet, dass** zwischen dem ersten Schenkel (16) der zweiten Gehäuseschale (6) und der ersten Gehäuseschale (4) und zwischen der ersten Gehäuseschale (4) und dem zweiten Schenkel (18) der zweiten Gehäuseschale (6) jeweils wenigstens eine Abgasströmungsverbindung vorhanden ist.

12. Abgasnachbehandlungsvorrichtung nach einem der vorhergehenden Ansprüche, **dadurch gekennzeichnet, dass** zwischen dem Quersteg (14) der zweiten Gehäuseschale (6) und dem ersten Schenkel (16) der zweiten Gehäuseschale (6) sowie zwischen dem Quersteg (14) der zweiten Gehäuseschale (6) und dem zweiten Schenkel (18) der zweiten Gehäuseschale (6) jeweils wenigstens eine Abgasströmungsverbindung vorhanden ist.

13. Abgasnachbehandlungsvorrichtung nach einem der vorhergehenden Ansprüche, **dadurch gekennzeichnet, dass** der Quersteg (14) und die beiden Schenkel (16, 18) der zweiten Gehäuseschale (6) aus Stahlblech bestehen und miteinander verschweißt sind.

14. Abgasnachbehandlungsvorrichtung nach einem der vorhergehenden Ansprüche, **dadurch gekennzeichnet, dass** die erste Gehäuseschale (4) wenigstens einen Dieselpartikelfilter (DPF) wenigstens teilweise haust.

15. Abgasnachbehandlungsvorrichtung nach einem der vorhergehenden Ansprüche, **dadurch gekennzeichnet, dass** die zweite Gehäuseschale (6) in Strömungsrichtung des Abgasstroms gesehen wenigstens einen Oxidationskatalysator (DOC), eine Mischvorrichtung (12) zum Einbringen eines Reduktionsmittels in den Abgasstrom und wenigstens einen Reduktionskatalysator (SCR) haust.

16. Abgasnachbehandlungsvorrichtung nach Anspruch 15, **dadurch gekennzeichnet, dass** der Oxidationskatalysator (DOC) in dem ersten Schenkel (16), die Mischvorrichtung (12) teilweise in dem zweiten Schenkel (18) und teilweise in dem Quersteg (14) und der Reduktionskatalysator (SCR) in dem Quersteg (14) gehaust sind.

17. Abgasnachbehandlungsvorrichtung nach Anspruch 16, **dadurch gekennzeichnet, dass** der Quersteg (14) zwei voneinander getrennte Querstegfluten aufweist, wobei in einer ersten Querstegflut (32) ein Teil der Mischvorrichtung (12) und in einer zweiten, parallel zur ersten Querstegflut (32) angeordneten Querstegflut (34) der Reduktionskatalysator (SCR) angeordnet ist.

18. Abgasnachbehandlungsvorrichtung einem der vorhergehenden Ansprüche, **dadurch gekennzeichnet, dass** die Abgaseinlassöffnung (8) und die Abgasauslassöffnung (10) in der zweiten Gehäuseschale (6) ausgebildet sind.

19. Abgasnachbehandlungsvorrichtung nach einem der vorhergehenden Ansprüche, **dadurch gekennzeichnet, dass** die zweite Gehäuseschale (6) wenigstens ein Befestigungsmittel (24, 28) zur Befestigung an einem Rahmen oder einer tragenden Struktur des Fahrzeugs aufweist.

20. Abgasnachbehandlungsvorrichtung nach Anspruch 19, **dadurch gekennzeichnet, dass** ein erstes Befestigungsmittel (24) an einer von der ersten Gehäuseschale (4) weg weisenden Seitenfläche (26) des ersten Schenkels (16) der zweiten Gehäuseschale (6) und ein zweites Befestigungsmittel (28) an einer von der ersten Gehäuseschale (4) weg weisenden Seitenfläche (30) des zweiten Schenkels (18) der zweiten Gehäuseschale (6) ausgebildet ist.

21. Kraftfahrzeug mit einer Brennkraftmaschine und mit wenigstens einer Abgasnachbehandlungsvorrichtung (1) nach wenigstens einem der vorhergehenden Ansprüche.

## Claims

1. An exhaust gas treatment device (1) of an internal combustion engine of a motor vehicle, wherein the exhaust gas treatment device partially purifies an exhaust gas flow from contaminants, wherein the exhaust gas flow is introduced through an inlet opening (8) and then conducted through an outlet opening (10) into an ambient atmosphere, and wherein the exhaust gas treatment device includes a housing (2) that includes plural housing shells (4, 6),
a) wherein at least one first housing shell (4) of the housing shells (4, 6) is connected with at least one second housing shell (6) by at least one disengageable connection (20, 22),
b) Wherein the disengageable connection (20, 22) includes at least one centering ring (68, 70) through which the housing shells (4, 6) are in indirect contact with each other in at least one mounting plane (72, 74),
c) wherein the at least one centering ring (68, 70) is a component that is separate from the housing shells (4, 6),
d) wherein the at least one centering ring (68, 70) includes an inner centering collar (76), a center section (78) that is arranged between ends (46, 48, 50, 52) of the housing shells (4, 6), and an outer centering collar (80),
e) wherein the inner centering collar (76) is configured to contact at an inner circumferential surface of the first housing shell (4) and the outer centering collar (80) is configured to contact at an outer circumferential surface of the second housing shell (6), or the inner centering collar (76) is configured to contact at an inner circumferential surface of the second housing shell (6), and the outer centering collar (80) is configured to contact at an outer circumferential surface of the first housing shell (4),
f) wherein the outer centering collar (80) includes a circumferential recess (84) with respect to a circumference of the at least one centering ring (68, 70) so that the first housing shell (4) and the second housing shell (6) are movable relative to each other and disengageable from each other along the at least one mounting plane (72, 74) for assembly and disassembly, **characterized in that**
g) the second housing shell (6) has a U-shaped cross-section with a first arm (16) and a second arm (18) that are connected by a transversal branch (14),
h) wherein the first housing shell (4) is supported between the first arm (16) and the second arm (18) of the second housing shell (6) respectively by a disengageable connection (20, 22),
i) wherein a first end (48) of the first housing shell (4) indirectly contacts the first arm (16) of the second housing shell (6) through a first centering ring (68), and a second end (50) of the first housing shell (4) indirectly contacts the second arm (18) of the second housing shell (6) through a second centering ring (70),
j) wherein at least one fold or bead (90) is configured in a jacket wall in a portion of at least one end (46, 52) of a housing shell (6) so that the jacket wall is elastically deformable in the portion.

2. The exhaust gas treatment device according to claim 1, **characterized in that** the first centering ring (68) and the second centering ring (70) respectively have a circular cross-section, wherein the outer centering collar (80) extends at the most about half a circumference of the first centering ring and the second centering ring (68, 70).

3. The exhaust gas treatment device according to claim 2, **characterized in that**, the inner centering collar (76) extends over an entire circumference of the first centering ring and the second centering ring (68, 70) and is provided with gaps in a circumferential direction or without gaps in the circumferential direction.

4. The exhaust gas treatment device according one of the preceding claims, **characterized in that** a gasket (82) is respectively provided between the center section (78) of a centering ring (68, 70) and an end (48, 50) of the first housing shell (4) that is oriented towards the center section (78) and between the center section (78) and an end (46, 52) of the second housing shell (6) that is oriented towards the center section (78).

5. The exhaust gas treatment device according one of the preceding claims, **characterized in that**, the first arm (16) of the second housing shell (6) includes a first spout (60) that is arranged orthogonal to a first mounting plane (72) and that is provided with at least one first flow opening (58), and the second arm (18) of the second housing shell (6) includes a second spout (64) that is arranged orthogonal to a second mounting plane (74) and that is provided with at least one second flow opening (62).

6. The exhaust gas treatment device according to claim 5, **characterized in that** the first centering ring (68) is arranged between a free end (46) of the first spout (60) and a first end (48) of the first housing shell (4), and the second centering ring (70) is arranged between a second end (50) of the first housing shell (4) and a free end (52) of the second spout (64) of the second housing shell (6).

7. The exhaust gas treatment device according claim 6, **characterized in that** the disengageable connections (20, 22) include two clamping devices (88), wherein a first clamping device (88) clamps the free end (46) of the first spout (60) and first end (48) of the first housing shell (4), and a second clamping device (88) clamps the free end (52) of the second spout (64) and the second end (50) of the first housing shell (4).

8. The exhaust gas treatment device according one of the preceding claims, **characterized in that** the free end (46) of the first spout (60), the first end (48) of the first housing shell (4), the second end (50) of the first housing shell (4) and the free end (52) of the second spout (64) of the second housing shell (6) respectively include at least one fold over (66) that covers a partial circle and that protrudes outward.

9. The exhaust gas treatment device according claim 8, **characterized in that** the center sections (78) of the centering rings (68, 70) substantially extend in the mounting planes (72, 74) and contact respectively on both sides at least one fold over (66).

10. The exhaust gas treatment device according claim 8 or 9, **characterized in that** the disengageable connections (20, 22) respectively include a clamping device (88) with a frustum-shaped cross-section which reaches over the fold overs (66) and clamps them together.

11. The exhaust gas treatment device according one of the preceding claims, **characterized in that** at least one exhaust gas flow connection is respectively provided between the first arm (16) of the second housing shell (6) and the first housing shell (4), and between the first housing shell (4) and the second arm (18) of the second housing shell (6).

12. The exhaust gas treatment device according one of the preceding claims, **characterized in that** at least one exhaust gas flow connection is respectively provided between the transversal bar (14) of the second housing shell (6) and the first arm (16) of the second housing shell (6) and between the transversal branch (14) of the second housing shell (6) and the second arm (18) of the second housing shell (6).

13. The exhaust gas treatment device according one of the preceding claims, **characterized in that** the transversal bar (14) and the two arms (16, 18) of the second housing shell (6) are made from steel sheet material and welded together.

14. The exhaust gas treatment device according one of the preceding claims, **characterized in that** the first housing shell (4) encloses a diesel particle filter (DPF) at least partially.

15. The exhaust gas treatment device according one of the preceding claims, **characterized in that** the second housing shell (6) encloses at least one diesel oxidation catalyst (DOC) converter, a mixing device (12) for introducing a reduction agent into the exhaust gas flow, and at least one selective catalyst reduction (SCR) converter.

16. The exhaust gas treatment device according claim 15, **characterized in that** the diesel oxidation catalyst (DOC) converter is housed in the first arm (16), the mixing device (12) is partially housed in the second arm (18) and partially in the transversal bar (14), and the selective catalyst reduction (SCR) converter is housed in the transversal bar (14).

17. The exhaust gas treatment device according claim 16, **characterized in that** the transversal branch (14) includes two separated transversal bar flow paths wherein a portion of the mixing device (12) is arranged in a first transversal bar flow path (32) and the selective catalyst reduction (SCR) converter is arranged in a second transversal bar flow path (34) that is arranged parallel to the first transversal bar flow path (32).

18. The exhaust gas treatment device according one of the preceding claims, **characterized in that** the exhaust gas inlet opening (8) and the exhaust gas outlet opening (10) are configured in the second housing shell (6).

19. The exhaust gas treatment device according one of the preceding claims, **characterized in that** the second housing shell (6) includes at least one attachment device (24, 28) for attachment at a frame or at a load-bearing structure of the vehicle.

20. The exhaust gas treatment device according claim 19, **characterized in that** a first attachment device (24) is configured at a side surface (26) of the arm (16) of the second housing shell (6) that is oriented away from the first housing shell (4), and a second attachment device (28) is arranged at a side surface (30) of the second arm (18) of the second housing shell (6) that is oriented away from the first housing shell (4).

21. A motor vehicle with an internal combustion engine, comprising at least one exhaust gas treatment device (1) according to at least one of the preceding claims.

## Revendications

1. Dispositif de post-traitement des gaz d'échappement (1) d'un moteur à combustion d'un véhicule qui libère un flux de gaz d'échappement au moins partiellement de substances nocives qui est introduit par un orifice d'admission (8) et qui le dirige dans l'atmosphère par un orifice de sortie (10) et qui présente un bâti (2) avec plusieurs coques de bâti (4, 6), cependant que
a) parmi les coques de bâti (4, 6) au moins une première coque de bâti (4) est reliée à au moins une seconde coque de bâti (6) par au moins une liaison amovible (20, 22),
b) la liaison amovible (20, 22) comprend au moins un anneau de centrage (68, 70) par lequel les coques de bâti (4, 6) sont en contact indirect dans au moins un plan de montage (72, 74),
c) le au moins un anneau de centrage (68, 70) constitue un composant distinct qui est séparé des coques de bâti (4, 6),
d) le au moins un anneau de centrage (68, 70) présente un collet de centrage intérieur (76), une portion centrale (78) intercalée entre les extrémités (46, 48, 50, 52) des coques de bâti (4, 6) ainsi qu'un collet de centrage extérieur (80),
e) le collet de centrage intérieur (76) est prévu pour l'appui sur une surface circonférentielle intérieure de la première coque de bâti (4) et le collet de centrage extérieur (80) sur une surface circonférentielle extérieure de la seconde coque de bâti (6) ou le collet de centrage intérieur (76) est prévu pour l'appui sur une surface circonférentielle intérieure de la seconde coque de bâti (6) et le collet de centrage extérieur (80) sur une surface circonférentielle extérieure de la première coque de bâti (4),
f) par rapport à la circonférence du au moins un anneau de centrage (68, 70), le collet de centrage extérieur (80) présente un évidement circonférentiel (84) tel que la première coque de bâti (4) et la seconde coque de bâti (6) sont mobiles l'une par rapport à l'autre le long du au moins un plan de montage (72, 74) et peuvent être détachées l'une de l'autre à des fins de montage et de démontage, **caractérisé en ce que**
g) la seconde coque de bâti (6) présente une section transversale en forme de U, ceci étant vu en section, avec deux montants (16, 18) qui relient l'un à l'autre une baguette transversale (14), un premier montant (16) et un second montant (18), cependant que
h) la première coque de bâti (4) est maintenue par respectivement une liaison amovible (20, 22) entre le premier montant (16) et le second montant (18) de la seconde coque de bâti (6) et cependant
i) qu'une première extrémité (48) de la première coque de bâti (4) est en contact indirect avec le premier montant (16) de la seconde coque de bâti (6) par un premier anneau de centrage (68) et une seconde extrémité (50) de la première coque de bâti (4) est en contact indirect avec le second montant (18) de la seconde coque de bâti (6) par un second anneau de centrage (70), cependant
j) qu'au moins un pli ou une moulure est configurée dans une paroi d'enveloppe dans la zone d'au moins une extrémité (46, 52) d'une coque de bâti (6) de telle manière que la paroi d'enveloppe est déformable élastiquement dans cette zone.

2. Dispositif de post-traitement des gaz d'échappement selon la revendication 1, **caractérisé en ce que** le premier anneau de centrage (68) et le second anneau de centrage (70) présentent chacun une section circulaire, cependant que le collet de centrage extérieur (80) s'étend respectivement jusqu'au plus la moitié de la circonférence de l'anneau de centrage (68, 70).

3. Dispositif de post-traitement des gaz d'échappement selon la revendication 2, **caractérisé en ce que** le collet de centrage intérieur (76) s'étend sur toute la circonférence de l'anneau de centrage (68, 70) et est pourvu de vides de circonférence, ceci étant vu dans le sens de la circonférence, ou est configuré sans vides de circonférence.

4. Dispositif de post-traitement des gaz d'échappement selon l'une des revendications précédentes, **caractérisé en ce qu'**il est prévu respectivement une étanchéité (82) entre la portion centrale (78) d'un anneau de centrage (68, 70) et une extrémité (48, 50), tournée vers la portion centrale (78), de la première coque de bâti (4) ainsi qu'entre la portion centrale (78) et une extrémité (46, 52), tournée vers la portion centrale (78), de la seconde coque de bâti (6)

5. Dispositif de post-traitement des gaz d'échappement selon l'une des revendications précédentes, **caractérisé en ce que** le premier montant (16) de la seconde coque de bâti (6) présente un premier embout (60) placé perpendiculairement à un premier plan de montage (72) et pourvu d'au moins un premier orifice d'écoulement (58) et que le second montant (18) de la seconde coque de bâti (6) présente un second embout (64) placé perpendiculairement à un second plan de montage (74) et pourvu d'au moins un second orifice d'écoulement (62).

6. Dispositif de post-traitement des gaz d'échappement selon la revendication 5, **caractérisé en ce que** le premier anneau de centrage (68) est placé entre une extrémité libre (46) du premier embout (60) et une première extrémité (48) de la première coque de bâti (4) et le second anneau de centrage (70) est placé entre une seconde extrémité (50) de la première coque de bâti (4) et une extrémité libre (52) du second embout (64) de la seconde coque de bâti (6).

7. Dispositif de post-traitement des gaz d'échappement selon la revendication 6, **caractérisé en ce que** les liaisons amovibles (20, 22) comprennent deux moyens de serrage (88) dont un moyen de serrage serre l'extrémité libre (46) du premier embout (60) et la première extrémité (48) de la première coque de bâti (4) et un autre moyen de serrage (88) l'extrémité libre (52) du second embout (64) et la seconde extrémité (50) de la première coque de bâti (4) l'une contre l'autre.

8. Dispositif de post-traitement des gaz d'échappement selon l'une des revendications précédentes, **caractérisé en ce que** l'extrémité libre (46) du premier embout (60), la première extrémité (48) de la première coque de bâti (4) la seconde extrémité (50) de la première coque de bâti (4) ainsi que l'extrémité libre (52) du second embout (64) de la seconde coque de bâti (6) présentent chacune au moins un sertissage ou un enroulement (66) qui décrit au moins un cercle partiel et qui fait saillie vers l'extérieur.

9. Dispositif de post-traitement des gaz d'échappement selon la revendication 8, **caractérisé en ce que** les portions centrales (78) des anneaux de centrage (68, 70) sont substantiellement dans les plans de montage (72, 74) et sont en contact en forme de ligne des deux côtés chacune avec au moins un sertissage ou en enroulement (66).

10. Dispositif de post-traitement des gaz d'échappement selon la revendication 8 ou 9, **caractérisé en ce que** les liaisons amovibles (20, 22) comprennent chacune un moyen de serrage (88) avec une section tronconique qui serre les sertissages ou les enroulements (66) l'un contre l'autre en les prenant par le haut.

11. Dispositif de post-traitement des gaz d'échappement selon l'une des revendications précédentes, **caractérisé en ce qu'**il existe respectivement au moins une liaison d'écoulement des gaz d'échappement entre le premier montant (16) de la seconde coque de bâti (6) et de la première coque de bâti (4) et entre la première coque de bâti (4) et le second montant (18) de la seconde coque de bâti (6).

12. Dispositif de post-traitement des gaz d'échappement selon l'une des revendications précédentes, **caractérisé en ce qu'**il existe respectivement au moins une liaison d'écoulement des gaz d'échappement entre la baguette transversale (14) de la seconde coque de bâti (6) et le premier montant (16) de la seconde coque de bâti (6) ainsi qu'entre la baguette transversale (14) de la seconde coque de bâti (6) et le second montant (18) de la seconde coque de bâti (6).

13. Dispositif de post-traitement des gaz d'échappement selon l'une des revendications précédentes, **caractérisé en ce que** la baguette transversale (14) et les deux montants (16, 18) de la seconde coque de bâti (6) sont en tôle d'acier et sont soudés l'un à l'autre.

14. Dispositif de post-traitement des gaz d'échappement selon l'une des revendications précédentes, **caractérisé en ce que** la première coque de bâti (4) loge au moins partiellement un filtre à particules diesel (FAP).

15. Dispositif de post-traitement des gaz d'échappement selon l'une des revendications précédentes, **caractérisé en ce que** la seconde coque de bâti (6) loge au moins un catalyseur d'oxydation (DOC), un dispositif de mélange (12) pour amener un moyen de réduction dans le flux de gaz d'échappement et au moins un catalyseur de réduction (SCR), ceci étant vu dans le sens de l'écoulement du flux de gaz d'échappement.

16. Dispositif de post-traitement des gaz d'échappement selon la revendication 15, **caractérisé en ce que** le catalyseur d'oxydation (DOC) est logé dans le premier montant (16), le dispositif de mélange (12) partiellement dans le second montant (18) et partiellement dans la baguette transversale (14) et le catalyseur de réduction (SCR) dans la baguette transversale (14).

17. Dispositif de post-traitement des gaz d'échappement selon la revendication 16, **caractérisé en ce que** la baguette transversale (14) présente deux cannelures de baguette transversale séparées l'une de l'autre, cependant qu'une partie du dispositif de mélange (12) est placée dans une première cannelure de baguette transversale (32) et le catalyseur de réduction (SCR) est placé dans une seconde cannelure de baguette transversale (34) placée parallèlement à la première cannelure de baguette transversale (32).

18. Dispositif de post-traitement des gaz d'échappement selon l'une des revendications précédentes, **caractérisé en ce que** l'orifice d'admission des gaz d'échappement (8) et l'orifice de sortie des gaz d'échappement (10) sont configurés dans la seconde coque de bâti (6).

19. Dispositif de post-traitement des gaz d'échappement selon l'une des revendications précédentes, **caractérisé en ce que** la seconde coque de bâti (6) présente au moins un moyen de fixation (24, 28) pour la fixation à un cadre ou à une structure porteuse du véhicule.

20. Dispositif de post-traitement des gaz d'échappement selon la revendication 19, **caractérisé en ce qu'**un premier moyen de fixation (24) est configuré sur une surface latérale (26) du premier montant (16) de la seconde coque de bâti (6) qui est opposée à la première coque de bâti (4) et un second moyen de fixation (28) est configuré sur une surface latérale (30) du second montant (18) de la seconde coque de bâti (6) qui est opposée à la première coque de bâti (6).

21. Véhicule avec un moteur à combustion et avec au moins un dispositif de post-traitement des gaz d'échappement (1) selon au moins l'une des revendications précédentes.
